# EUROPÄISCHE PATENTANMELDUNG

(11) **EP 1 627 843 A1**
(43) Veröffentlichungstag der Anmeldung: **22.02.2006**
(21) Anmeldenummer: 05106389.9
(22) Anmeldetag: 13.07.2005
(51) Int. Cl.: B66C 1/46, B25B 5/06, B25J 15/00, B65G 47/90

(54) **Lastaufnahme zur Handhabung von Stückgut**

(30) Priorität: 16.08.2004 DE 102004039661
(71) Anmelder: SIEMENS AKTIENGESELLSCHAFT, 80333 München (DE)
(72) Erfinder: Besch, Axel, 65193 Wiesbaden (DE)

(57) **Zusammenfassung**

Die Erfindung betrifft ein Lastaufnahmemittel (1) zur Handhabung von Stückgut (4), insbesondere von Kartons und Lasten mit unregelmäßigen Konturen oder nicht planen Greifflächen, mit zwei einander im Abstand gegenüberliegenden Greifarmen (2a, 2b), die auf den einander zugewandten Seiten mit befüll- und entleerbaren flexibel aufblasbaren Gasräumen (3) bestückt sind, zwischen denen das Stückgut (4) im aufgeblasenen Zustand der Gasräume (3) gehalten wird. Um Stückgüter, insbesondere Kartons und Lasten mit unregelmäßigen Konturen oder nicht planen Greifflächen, auch mit signifikant unterschiedlichen Maßen, schnell, zuverlässig und sicher greifen zu können, wird vorgeschlagen, die Gasräume als zusammenfaltbare Kissen oder Bälge (3a bis 3d) auszubilden, deren in Wirkrichtung gemessene aufgeblasene Dicke (b) jeweils einem Vielfachen der Dicke (a) der Bälge oder Kissen (3a bis 3d) im entlüfteten Zustand entspricht.

## Beschreibung

Die Erfindung betrifft ein Lastaufnahmemittel zur Handhabung von Stückgut, insbesondere von Kartons und Lasten mit unregelmäßigen Konturen oder nicht planen Greifflächen, mit zwei einander im Abstand gegenüberliegenden Greifarmen, die auf den einander zugewandten Seiten mit befüll- und entleerbaren flexibel aufblasbaren Gasräumen bestückt sind, zwischen denen das Stückgut im aufgeblasenen Zustand der Gasräume gehalten wird.

Die Handhabung von Kartons, insbesondere Kartons von schlechter Qualität und handhabungstechnisch ungünstig geformten, beispielsweise zylindrischen Lasten, sowie auch von Kartons und Lasten von signifikant unterschiedlichen Größen ist mit bekannten Lastaufnahmemitteln problematisch. Die derzeit verwendeten verschiedenen Lastaufnahmemittel sind, wie im Folgenden dargelegt, mit Nachteilen behaftet.

Backengreifer greifen Kartons kraftschlüssig, das bedeutet, dass bei schlechter Kartonqualität eine zuverlässige Handhabung nicht immer gewährleistet ist. Die Handhabung von Kartons mit signifikant unterschiedlichen Maßen (z.B. Δ 200mm) ist mit Backengreifern in der Regel nicht möglich, und wenn die Greifbacken weit genug auseinanderfahrbar sind, erhöht die für das Verstellen der Greifbacken notwendige Zeit die Greifzeiten erheblich. Die Handhabung von Nicht-Quadern (z.B. zylindrische Lasten) ist nur durch deren Platzierung auf handhabbaren Tablaren möglich. Diese werden als Ladehilfsmittel eingesetzt, wenn eine Einlagerung von Kartons unterschiedlicher Grundfläche auf Winkelauflagen nicht möglich ist.

Saugbackengreifer greifen zwar auch Kartons von schlechter Qualität zuverlässig, doch ist auch hier die Handhabung von Kartons mit signifikant unterschiedlichen Maßen (Δ 200mm) nicht oder nur bei deutlich erhöhten Greifzeiten möglich. Die am Einlagerungs-/Auslagerungspunkt (EP/AP) zur Lastabgabe und Lastaufnahme durchzuführende Drehbewegung des Saugbackengreifers wie auch die Umlagerung im Regal vermindern die Lagerleistung. Eine Handhabung von anderen Objekten als Kartons ist bei der Verwendung von Sauggreifern nicht vorgesehen.

Teleskopgreifer greifen zwar aufgrund des formschlüssigen Greifens auch Kartons von schlechter Qualität zuverlässig, da aber eine Bewegung des Greifers über die gesamte Länge des Kartons erforderlich ist, treten hierbei sehr hohe Zykluszeiten auf. Aus diesem Grund werden Teleskopgreifer nur selten verwendet.

Es sind auch Lastaufnahmemittel zum Greifen und Verlagern von Kartons bekannt geworden, die nach dem Prinzip eines pneumatischen Schraubstockes das Stückgutteil zwischen an zwei Greifarmen angeordneten flexiblen Spannmembranen beidseitig einspannen und halten. Die Spannmembranen sind jeweils Teil eines Gasraumes, der über Steuerleitungen mit Druckluft gefüllt und entleert werden kann, wobei sich die beiden Gasräume beim Befüllen aufblähen und gegen die Seitenflächen des Stückgutes pressen und dadurch die zu haltende Last einspannen (DE 36 24 000 A1). Die beschriebene Vorrichtung ist zwar zum Spannen und damit auch zum Handhaben von bestimmten Gegenständen geeignet, setzt aber im Wesentlichen plane Seitenwände des Stückgutes mit nur sehr gering differierenden Abstandsmaßen voraus, denn die Membran ist so konzipiert, dass sie nur sehr geringe Spannwege zulässt.

Aufgabe der vorliegenden Erfindung ist es, ausgehend von dem beschrieben Stand der Technik, das bekannte, mit zwei einander im Abstand gegenüberliegenden Greifarmen bestückte Lastaufnahmemittel, dessen Greifarme auf den einander zugewandten Seiten mit befüll- und entlüftbaren flexibel aufblasbaren Gasräumen versehen sind, so zu verbessern, dass auch Stückgüter, insbesondere Kartons und Lasten mit unregelmäßigen Konturen oder nicht planen Greifflächen, auch mit signifikant unterschiedlichen Maßen, schnell, zuverlässig und sicher gegriffen werden können.

Zur Lösung der Aufgabe wird ein Lastaufnahmemittel vorgeschlagen, das dadurch gekennzeichnet ist, dass die Gasräume als zusammenfaltbare Kissen oder Bälge ausgebildet sind, deren in Wirkrichtung gemessene aufgeblasene Dicke jeweils einem Vielfachen der Dicke der Bälge oder Kissen im entlüfteten Zustand entspricht.

Durch den Einsatz von Kissen oder Bälgen, die die kraftschlüssige Verbindung zum Stückgut herstellen, wird ein sicherer Griff auch bei unregelmäßigen Konturen oder nicht planen Greifflächen der Stückgüter gewährleistet. Dies insbesondere auf Grund der Dicke der Bälge oder Kissen, die die Fähigkeit besitzen, der Oberfläche des zu greifenden Objektes zu "folgen". Das ist vor allem bei schlechten Kartonqualitäten und Nicht-Quader-Formen von Vorteil.

Erfindungsgemäß ist es besonders günstig, wenn die Dicke der Bälge oder Kissen im aufgeblasenen Zustand mindestens der doppelten bis dreifachen Dicke der Bälge oder Kissen im entlüfteten Zustand entspricht. Durch geeignete Auswahl der pneumatischen Kissen oder Bälge wird mit der Erfindung auch die Handhabung von Objekten mit signifikant unterschiedlichen Maßen möglich.

In einer bevorzugten Ausgestaltung der Erfindung ist vorgesehen, dass die entlüfteten Bälge oder Kissen zum Greifen des Stückgutes im Wesentlichen horizontal beidseitig neben das Stückgut bewegbar und in der Greifposition befüllbar sind. Das schließt aber nicht aus, die Erfindung bei von oben greifenden Handhabungsgeräten anzuwenden.

Wenn nach einen anderen Merkmal der Erfindung die Greifarme zu dem Stückgut in einer Position einstellbar sind, in der einander gegenüberliegende Bälge oder Kissen die Kanten des Stückgutes mindestens teilweise umgreifen, können mit dieser Maßnahme mögliche Drehbewegungen der Last durch Schlupf zwischen dem Kissen oder Balg und der Seitenfläche der Last sicher verhindert werden. Das gleiche Ergebnis kann man erreichen, wenn nach einem anderen Merkmal der Erfindung jeder Greifarm mit mehr als einem Balg oder Kissen bestückt ist.

Um das Gewicht des zu handhabenden Stückgutes problemlos beherrschen zu können und Verformungen der Kissen oder Bälge quer zur Greifrichtung zu minimieren, ist des Weiteren vorgesehen, die Bälge oder Kissen mit querstabilisierenden Armierungen und/oder Versteifungen zu versehen.

Als Druckmittel zum Befüllen der Bälge oder Kissen ist vorzugsweise Druckluft vorgesehen, es sind aber auch andere geeignete Gase denkbar.

Durch Variieren der eingeblasenen Gasmenge in die Kissen/Bälge lässt sich das "Zufahren" der Greifeinrichtung steuern. Da die Befüllungszeit davon nicht maßgeblich beeinflusst wird, ist das Handhaben von Objekten mit signifikant unterschiedlichen Maßen bei Beibehaltung kurzer Greifzeiten möglich.

Erfindungsgemäß ist der Druck zum Befüllen der Bälge oder Kissen mit Druckluft und Gas einstellbar. Dadurch lassen sich die Haltekräfte an das zu handhabende Stückgut variabel anpassen.

Vorzugsweise ist das Lastaufnahmemittel der Erfindung zum Aufnehmen von Stückgut aus einem und zum Abgeben an ein Regal ausgebildet, besonders vorteilhaft ist das Lastaufnahmemittel auf einem Regalbediengerät angeordnet ist.

Aus der Anwendung des erfindungsgemäßen Lastaufnahmemittels ergibt sich eine Reihe von Vorteilen. So wird mit den Kissen oder Bälge eine kraftschlüssige Verbindung zur Last hergestellt, welche einen sicherer Griff gewährleistet, weil die greifende Oberfläche in der Lage ist, der Oberfläche des zu greifenden Objektes zu "folgen". Dies ist vor allem bei schlechten Kartonqualitäten und Nicht-Quader-Formen von Nutzen. Durch geeignete Auswahl der pneumatischen Kissen oder Bälge wird auch die Handhabung von Objekten mit signifikant unterschiedlichen Maßen möglich; denn durch Variieren der eingefüllten Gasmenge in die Kissen oder Bälge lässt sich das "Zufahren" der Greifeinrichtung ohne Zusammenfahren der Greifarme steuern. Da die Befüllungszeit davon nicht maßgeblich beeinflusst wird, ist das Handhaben von Objekten mit signifikant unterschiedlichen Maßen bei Beibehaltung kurzer Greifzeiten möglich. In vielen Fällen kann eine symmetrische Positionierung der Lasten am EP entfallen, da der erfindungsgemäße Greifer eine evtl. zentrische Abweichung durch einen "zuverlässigen" Griff ausgleicht. Da auch ungünstig geformte Stückgüter auf Fachböden gelagert werden können, ermöglicht die Erfindung eine bessere Volumenfüllung des Lagers und erleichtert die Handhabung.

Ein Ausführungsbeispiel der Erfindung ist in der Zeichnung schematisch dargestellt und wird nachfolgend beschrieben. Es zeigt:
- Figur 1: das erfindungsgemäße Lastaufnahmemittel in geöffneter Stellung ,
- Figur 2: das Lastaufnahmemittel nach Figur 1 in geschlossener Stellung,
- Figur 3: das Lastaufnahmemittel mit Überlappung zum Stückgut und
- Figur 4: das Lastaufnahmemittel mit jeweils zwei Bälgen auf jeder Seite.

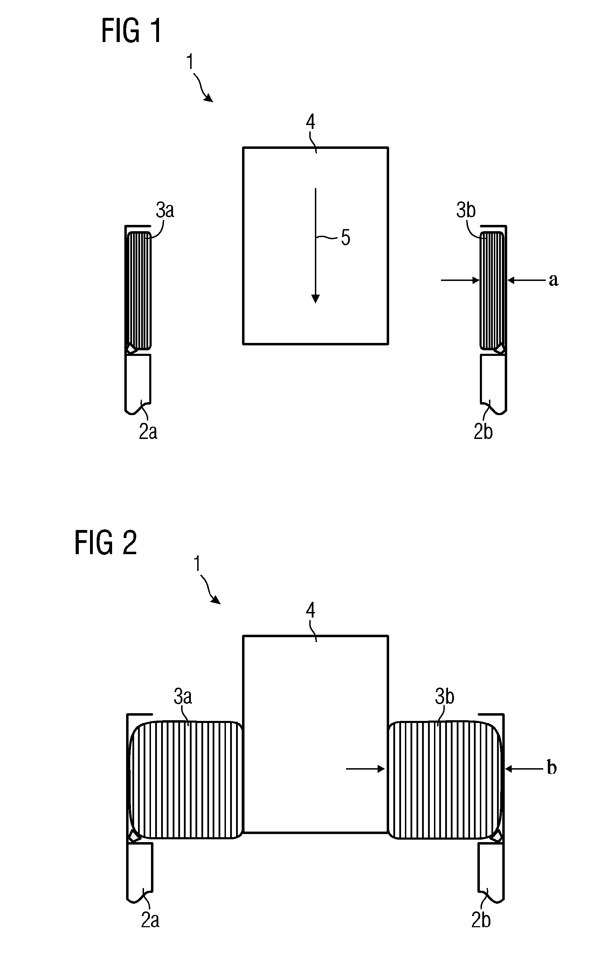

In Figur 1 ist in grob schematischer Darstellung ein erfindungsgemäßes Lastaufnahmemittel 1 in der Draufsicht dargestellt. Erkennbar ist das mit 4 bezeichnete Stückgut, das zwischen den gespreizten Greifarmen 2a und 2b des Lastaufnahmemittels 1 positioniert ist und das in Pfeilrichtung 5 aus einem (nicht dargestellten Regal) ausgelagert werden soll. Das Stückgut 4 soll dazu mit den Bälgen 3a und 3b ergriffen werden, die in Figur 1 im zusammengefalteten Zustand an den beiden Greifarmen 2a und 2b dargestellt sind. Über eine nicht dargestellte Druckluftversorgungsleitung sind die Bälge 3a und 3b an eine Druckluftquelle angeschlossen und können über diese aufgebläht werden. Diese Situation ist in der Figur 2 dargestellt, die mit Druckluft gefüllten Bälge 3a und 3b sind jetzt aufgebläht, u.z. von einer zusammengefalteten Dicke a (Figur 1) zu einer Dicke b (Figur 2). Dabei pressen sich die dem Stückgut 4 zugewandten Seiten der Bälge 3a und 3b gegen die Seitenwände des Stückgutes 4 und pressen es zwischen den Greifarmen 2a und 2b fest. Das so aufgenommene Stückgut 4 kann jetzt durch Verfahren des Lastaufnahmemittels 1 in Pfeilrichtung 5 (Figur 1) aus dem Regal, beispielsweise auf das Regalbediengerät, gezogen werden. Dabei spielt die Breite des Stückgutes über einen großen Bereich keine Rolle, weil die Bälge Breitenunterschiede ausgleichen. Auch können ungerade Seitenflächen ebenso leicht und sicher gegriffen werden, weil sich der Balg den Unebenheiten anpasst. Dadurch wird es auch möglich, zylindrische Stückgutteile zu greifen und unmittelbar auf Regalböden abzusetzen, ohne dass Ladehilfsmittel eingesetzt werden müssen.

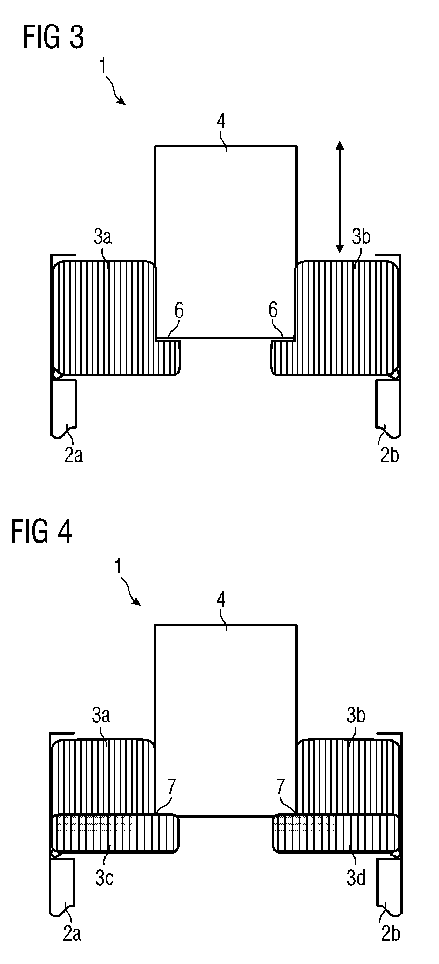

Ein anderer Vorteil des erfindungsgemäßen Ladehilfsmittels ist in Figur 3 dargestellt. Erkennbar umgreifen beiden Bälge 3a und 3b die Kanten 6 des Stückgutes, d.h. die flexible Hülle jedes Balges 2 umgreift die Kante 6 so, dass ein Verdrehen des Stückgutes 4 unter seiner Last und infolge Durchrutschens der Bälge an der Seitenfläche der Last verhindert wird.

Einen gleichen Effekt erreicht man, wenn man jeden Greifarm 2a und 2b mit zwei Bälgen 3a und 3c bzw. 3b und 3d bestückt, die der Form des zu handhabenden Stückgutes angepasst abgestuft sind. In die sich zwischen den beiden Bälgen einer Seite des Greifarmes 2a bzw. 2b bildende Ecke 7 wird beim Beaufschlagen der Bälge mit Druckmittel die Kante 6 des Stückgutes eingelegt, so dass das Stückgut fest und verdrehsicher gehalten wird.

Die Bälge können aus einem in Querrichtung, d.h. quer zur Haltekraft, formsteifen Material bestehen, das zusätzlich mit Versteifungen und Armierungen versehen sein kann.

## Patentansprüche

1. Lastaufnahmemittel (1) zur Handhabung von Stückgut (4), insbesondere von Kartons und Lasten mit unregelmäßigen Konturen oder nicht planen Greifflächen, mit zwei einander im Abstand gegenüberliegenden Greifarmen (2a, 2b), die auf den einander zugewandten Seiten mit befüll-und entleerbaren flexibel aufblasbaren Gasräumen (3) bestückt sind, zwischen denen das Stückgut (4) im aufgeblasenen Zustand der Gasräume (3) gehalten wird,
**dadurch gekennzeichnet, dass**
die Gasräume als zusammenfaltbare Kissen oder Bälge (3a bis 3d) ausgebildet sind, deren in Wirkrichtung gemessene aufgeblasene Dicke (b) jeweils einem Vielfachen der Dicke (a) der Bälge oder Kissen (3a bis 3d) im entlüfteten Zustand entspricht.

2. Lastaufnahmemittel nach Anspruch 1,
**dadurch gekennzeichnet, dass**
die Dicke (b) der Bälge oder Kissen (a) im aufgeblasenen Zustand mindestens der doppelten bis dreifachen Dicke der Bälge oder Kissen (3a bis 3d) im entlüfteten Zustand entspricht.

3. Lastaufnahmemittel nach Anspruch 1 und 2,
**dadurch gekennzeichnet, dass**
die entlüfteten Bälge oder Kissen (3a bis 3d) zum Greifen des Stückgutes (4) im Wesentlichen horizontal beidseitig neben das Stückgut (4) bewegbar und in der Greifposition befüllbar sind.

4. Lastaufnahmemittel nach einem oder mehreren der Ansprüche 1 bis 3,
**dadurch gekennzeichnet, dass**
die Greifarme (2a, 2b) zu dem Stückgut (4) in einer Position einstellbar sind, in der einander gegenüberliegende Bälge oder Kissen (3a bis 3d) die Kanten des Stückgutes (4) mindestens teilweise umgreifen.

5. Lastaufnahmemittel nach einem oder mehreren der Ansprüche 1 bis 4,
**dadurch gekennzeichnet, dass**
jeder Greifarm (2a, 2b) mit mehr als einem Balg oder Kissen (3a bis 3d) bestückt ist.

6. Lastaufnahmemittel nach einem oder mehreren der Ansprüche 1 bis 5,
**dadurch gekennzeichnet, dass**
die Bälge oder Kissen (3a bis 3d) mit querstabilisierenden Armierungen und/oder Versteifungen versehen sind.

7. Lastaufnahmemittel nach einem oder mehreren der Ansprüche 1 bis 6,
**dadurch gekennzeichnet, dass**
die Bälge oder Kissen (3a bis 3d) mit Druckluft befüllbar sind.

8. Lastaufnahmemittel nach einem oder mehreren der Ansprüche 1 bis 6,
**dadurch gekennzeichnet,**
**dass** die Bälge oder Kissen (3a bis 3d) mit Gas befüllbar sind.

9. Lastaufnahmemittel nach den Ansprüchen 7 und 8,
**dadurch gekennzeichnet, dass**
der Druck zum Befüllen der Bälge oder Kissen (3a bis 3d) mit Druckluft und Gas einstellbar ist.

10. Lastaufnahmemittel nach einem oder mehreren der Ansprüche 1 bis 9,
**dadurch gekennzeichnet, dass**
das Lastaufnahmemittel (1) zum Aufnehmen von Stückgut (4) aus einem und zum Abgeben an ein Regal ausgebildet ist.

11. Lastaufnahmemittel nach Anspruch 10,
**dadurch gekennzeichnet, dass**
das Lastaufnahmemittel (1) auf einem Regalbediengerät angeordnet ist.
